# EUROPEAN PATENT APPLICATION

(11) **EP 4 787 265 A1**
(43) Date of publication of application: **05.08.2026**
(21) Application number: 26150904.6
(22) Date of filing: 08.01.2026
(51) Int. Cl.: G06Q 20/18, G06Q 20/20, G07G 1/00

(54) **PRODUCT REGISTRATION SYSTEM**

(30) Priority: 03.02.2025 JP 2025016330
(71) Applicant: Toshiba TEC Kabushiki Kaisha, Tokyo 141-8562 (JP)
(72) Inventor: Okuma, Yumiko, Tokyo 141-8562 (JP)
(74) Representative: Bandpay & Greuter

(57) **Abstract**

According to one embodiment, a product registration system includes a mobile terminal connected to a network to permit a customer to perform product registration operations on products for sale at a store, a store clerk terminal for monitoring customer transactions, a cart control server to register products in a transaction table in response to a product registrations performed with the mobile terminal, and the mobile terminal to display a product registration screen. The cart control server also cause the mobile terminal to display a customer facial image captured by a camera of the mobile terminal or a basket image of a cart to which the mobile terminal is attached and transmits a warning notification to the store clerk terminal when a switching operation is performed to turn off the displaying of the customer facial image or the basket image on the display screen of the mobile terminal.

## Description

### FIELD

Embodiments described herein relate generally to a product registration system.

### BACKGROUND

So called "semi-self-service" product sales systems in which product registration functions and checkout functions usually provided by a POS (Point Of Sales) terminal are separated into a registration machine operated by a store clerk and a checkout machine operated by the customer have already been widely put to practical use.

In recent years, product sales systems which permit a customer to register products for purchase while walking around a sales floor with a wireless information terminal have been introduced. In general, such an information terminal incorporates a scanner that reads product codes from barcodes or the like attached to the products being purchased. An information processing device in this context may be a tablet computer that displays registered product information associated with a product code and accepts customer input operations such as a correction operation. In some examples, these devices are installed on a shopping cart to be used by the customer while at the store. In other examples, a customer's own smartphone can also be used for registering products for purchase. In such a case, the smartphone may be placed on a stand provided on the shopping cart and positioned so a camera of the smartphone can be used as a scanner. In such a type of product sales system, customers themselves register products while shopping, which can reduce congestion in the checkout area or at a cash register.

On the other hand, with such a product sales system in which customers themselves register products, there is the possibility of fraudulent behavior that may be difficult to detect. For example, customers put products into a basket in a shopping cart without registering them, pay for some other products, and then leave the store. This type of fraudulent behavior is not limited to cases where it is intentional, but can also be unintentional. That is, customers may make inadvertent mistakes, such as inadvertently forgetting to register a product before putting the product into the basket, then paying for other items and leaving.

### DISCLOSURE OF THE INVENTION

To this end, a product registration system, a retail store product registration system and a cart control server for such systems according to appended claims are provided.

### BRIEF DESCRIPTION OF THE DRAWINGS

FIG. 1 is a diagram showing an overall configuration of a product sales system to which a product registration system according to a first embodiment is applied.
FIG. 2 is a block diagram of a cart controller.
FIG. 3 is a schematic diagram showing a data structure of an information terminal table of a cart controller.
FIG. 4 is a schematic diagram showing the position of an information terminal attached to a shopping cart.
FIG. 5 is a block diagram of an information terminal.
FIG. 6 is a sequence diagram of an operation of a product sales system.
FIG. 7 is a sequence diagram showing an image display operation in a product registration system.
FIG. 8 is a schematic diagram showing an example of a product registration screen.
FIG. 9 is a schematic diagram showing an example of a product registration screen.
FIG. 10 is a schematic diagram showing an example of a store clerk monitoring screen.
FIG. 11 is a schematic diagram showing an example of a store clerk monitoring screen.
FIGs. 12 to 14 provide a flowchart of information processing procedures executed by a processor of a cart controller in accordance with a cart control program.
FIG. 15 is a sequence diagram of an operation of a product registration system according to a second embodiment.
FIG. 16 is a schematic diagram showing an example of a product registration screen.
FIG. 17 is a schematic diagram showing an example of a product registration screen.
FIG. 18 is a flowchart of information processing procedures executed by a processor of a cart controller in accordance with a cart control program.
FIG. 19 is a schematic diagram showing an example of a product registration screen according to a third embodiment.

### DETAILED DESCRIPTION

An object to be solved by an embodiment of the present invention is to provide an information management server and a product registration system that can reduce fraudulent behavior in which customers leave a store without registering their products and paying for them when the customers themselves register the products.

In general, according to one embodiment, a product registration system includes a network, a mobile product registration terminal connectable to the network and configured to permit a customer to perform product registration operations on products for sale at a store while moving around the store, and a cart control server connected to the network and configured to register products in a transaction table in response to a product registration operation performed on the mobile product registration terminal, and cause a product registration screen to be displayed on a display of the mobile product registration terminal, the product registration screen including information of registered products in the transaction table. The system also includes a store clerk terminal configured to present information related to usage of the mobile product registration terminal to a store clerk. The cart control server is also configured to cause at least one of a customer facial image captured by a camera of the mobile product registration terminal or a basket image of a cart product placement area of a cart on which the mobile product registration terminal is attached to be displayed on a display screen of the mobile product registration terminal, and transmit a warning notification over the network to the store clerk terminal when a switching operation is performed to turn off the displaying of the customer facial image or the basket image on the display screen of the mobile product registration terminal.

Hereinafter, certain example embodiments of a product registration system will be described with reference to the drawings. The following example embodiments are applied to a product sales system.

### First Embodiment

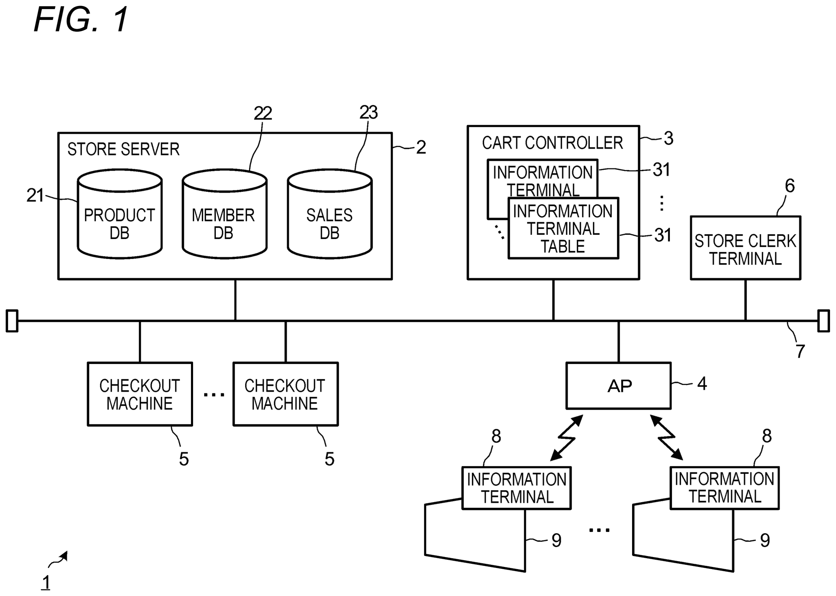

FIG. 1 is a diagram showing an overall configuration of a product sales system 1 to which a product registration system according to a first embodiment is applied. The product sales system 1 includes a store server 2, a cart controller 3, an access point 4 (indicated as "AP" in FIG. 1), a checkout machine 5, and a store clerk terminal 6. The store server 2, the cart controller 3, the access point 4, the checkout machine 5, and the store clerk terminal 6 are connected to a network 7 such as a local area network (LAN) or a wireless LAN. The product sales system 1 includes a plurality of information terminals 8 connected to the network 7 via the access point 4. The product registration system according to the first embodiment includes the cart controller 3, the access point 4, the store clerk terminal 6, the network 7, and the information terminals 8.

Note that the form of a communication network is not limited to the above, and can be any form that allows communication. For example, the communication network may include the Internet, and either or both of the store server 2 and the cart controller 3 may be in a cloud environment.

The information terminal 8 is a device that allows a customer (a purchaser) to input data related to the registration of purchased products by himself or herself. The information terminal 8 in this example is provided on, as part of, a shopping cart 9 that is used by the customer when shopping in a store. In the following, the shopping cart 9 will be simply referred to as a cart 9. Each of the plurality of carts 9 is provided with an information terminal 8. The cart 9 is an example of a carrier used to transport products being purchased by the customer.

The information terminal 8 is provided on the cart 9. The information terminal 8 is an information processing terminal that functions as a user interface for operations related to the registration of purchased products. The information terminal 8 is equipped with a wireless unit. The information terminal 8 performs wireless communication with the access point 4. The access point 4 relays communication between the information terminal 8 and the other devices connected to the network 7, that is, the store server 2, the cart controller 3, the checkout machine 5, and the store clerk terminal 6. Although only one access point 4 is shown in FIG. 1, there may be more than one depending on the size of the store.

The checkout machine 5 is a device that is installed in a checkout area of the store and allows a store clerk or a customer to perform checkout for purchased products. The checkout machine 5 can be a known type of self-service POS terminal. The checkout machine 5 can be a known type of face-to-face POS terminal. The number of checkout machines 5 is not particularly limited.

The store clerk terminal 6 can be a personal computer or tablet terminal operated by a store clerk who monitors the checkout area. The store clerk terminal 6 presents the store clerk with the current usage status of each information terminal 8, and when the current location of the information terminal 8 is in the checkout area, checkout machine identification information such as the ID number of the checkout machine to be used, and the like. The store clerk terminal 6 can also present the store clerk with registered contents associated with any information terminal 8 designated or selected by the store clerk. Although only one store clerk terminal 6 is shown in FIG. 1, the number of store clerk terminals is not particularly limited. In addition, one or more store clerk terminal 6 may be placed in a back office, a management room, or the like.

The store server 2 supports store operations. For this support, the store server 2 manages a product database 21, a member database 22, a sales database 23, and the like. In FIG. 1, database is abbreviated as "DB."

The product database 21 stores product records that describe product data for each product sold at the store. The product records include a product code, a price, a product name, and the like. The product code is an identification code for the product.

The member database 22 stores member records that describe member data for each member. The member data includes a member code, a name, a gender, an email address, and the like. The member code is a code such as a unique member number that is set for each member. In some examples, the member is provided with a recording medium on or in which the member code is recorded. The recording medium is, for example, a magnetic card or a contact integrated circuit (IC) card, a contactless IC card, a smartphone, or the like.

The sales database 23 stores sales records that describe sales data for each item, such as a product, a department, a time period, a date, a week, and a month. The sales data includes the number of items sold, the sales amount, and the like.

The store server 2 may also manage a member settlement database. The member settlement database stores a member settlement record that describes data necessary for payment for each member. In addition to the member code, the member settlement record may also include data related to electronic money or the like to be used for payment. For the sake of simplicity, specific details related to checkout (payment) with the electronic money will generally be omitted below.

The cart controller 3 cooperates with the information terminal 8 to provide support for making it appear as if the information terminal 8 is functioning as a POS terminal. The cart controller 3 includes an information terminal table 31 corresponding to each information terminal 8.

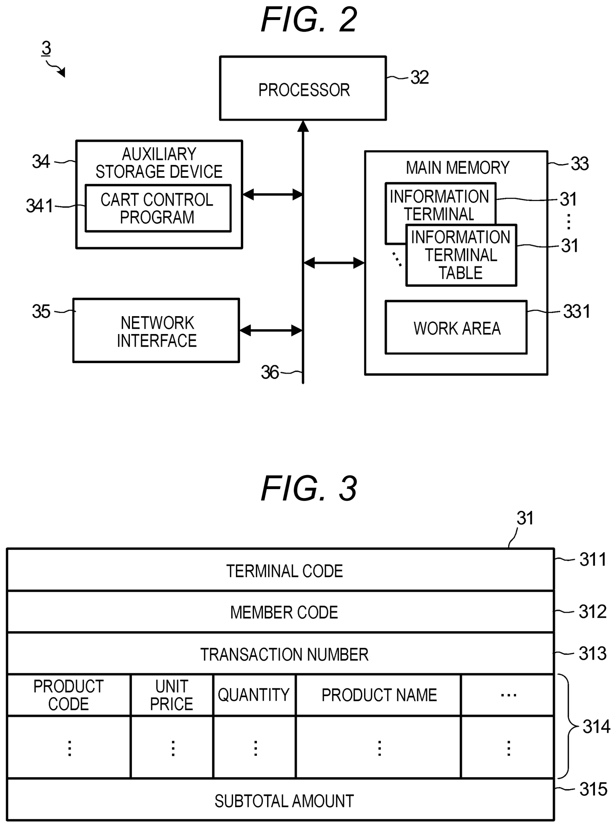

FIG. 2 is a block diagram showing a configuration of the cart controller 3. The cart controller 3 includes a processor 32, a main memory 33, an auxiliary storage device 34, a network interface 35, and a system transmission path 36. The system transmission path 36 includes an address bus, a data bus, a control signal line, and the like. The processor 32, the main memory 33, the auxiliary storage device 34, and the network interface 35 are connected to the system transmission path 36.

The processor 32 realizes various functions as the cart controller 3 in accordance with an operating system or an application program. The processor 32 is, for example, a central processing unit (CPU), but is not limited thereto. The processor 32 may be a multicore/multi-thread processor, and may execute a plurality of processes in parallel. The processor 32 may also be implemented in various other forms including integrated circuits such as a Graphics Processing Unit (GPU), an application specific integrated circuit (ASIC), a field-programmable gate array (FPGA), and a digital signal processor (DSP).

The main memory 33 includes a non-volatile memory area and a volatile memory area. The main memory 33 includes a non-volatile memory area such as a ROM and a volatile memory area such as a RAM. The volatile memory area stores the information terminal table 31 corresponding to each information terminal 8. Furthermore, the volatile memory area includes a work area 331 used when the processor 32 executes various processes.

Examples of the auxiliary storage device 34 include an electric erasable programmable read-only memory (EEPROM), a hard disc drive (HDD), a solid state drive (SSD), and the like. In this embodiment, the auxiliary storage device 34 stores a cart control program 341 for causing the cart controller 3 to execute a product registration function using the information terminal 8 as an application program. Note that the cart control program 341 may be stored in the non-volatile memory area of the main memory 33.

The network interface 35 is an interface for the network 7. The processor 32 can transmit and receive data to and from the store server 2, the access point 4, the checkout machine 5, and the store clerk terminal 6 via the network 7 by the network interface 35.

FIG. 3 is a schematic diagram showing an example of the information terminal table 31. As shown in FIG. 3, the information terminal table 31 includes a terminal code area 311, a member code area 312, a transaction number area 313, at least one purchased product data area 314, and a subtotal amount area 315. The terminal code area 311 stores a terminal code, such as a terminal number, for uniquely identifying the information terminal 8 corresponding to the information terminal table 31. The member code area 312 stores a member code. The transaction number area 313 is for a number uniquely identifying the current transaction. The purchased product data area 314 stores purchased product data for each product being purchased by the customer. That is, each time a product is registered in the transaction using the information terminal 8 corresponding information is added to a purchased product data area 314. In this context, purchased product data includes a product code, a unit price, the number of sales products (quantity), a product name, a sales amount, a tax amount, and the like associated with a purchased product. The subtotal amount area 315 shows a total of the sales amount and/or the tax amount for all purchased products. The total amount is calculated based on the purchased product data stored in the purchased product data areas 314. This can be updated every time the customer performs a registration operation.

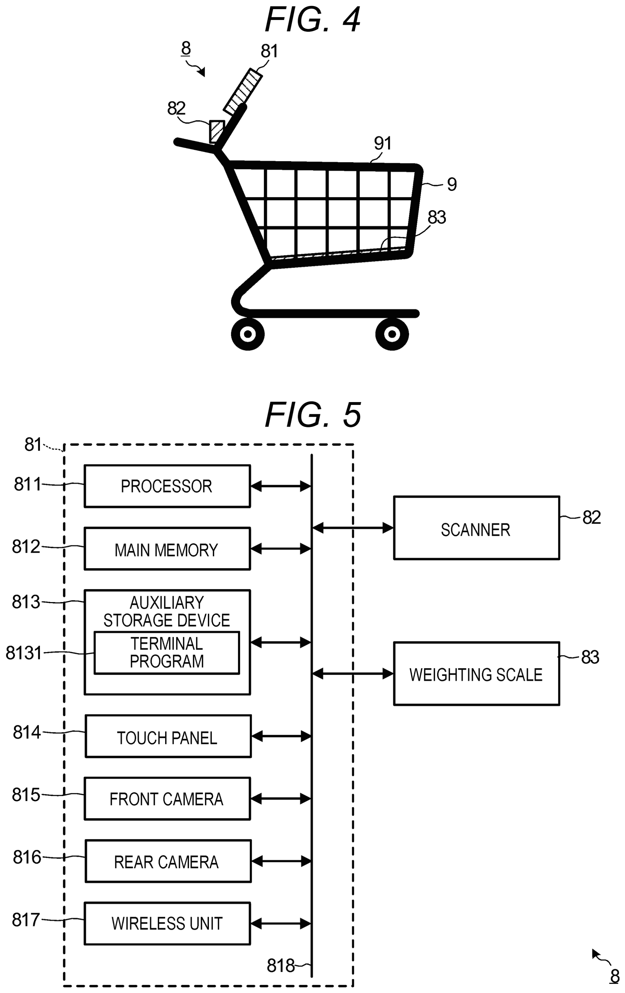

FIG. 4 is a schematic diagram showing the position of the information terminal 8 attached to the shopping cart 9. FIG. 5 is a block diagram showing a configuration of the information terminal 8. The information terminal 8 includes an information processing device 81, a scanner 82, and a weighing scale 83.

The information processing device 81 may be a dedicated device or a general-purpose device such as a tablet computer. The information processing device 81 includes a processor 811, a main memory 812, an auxiliary storage device 813, a touch panel 814, a front camera 815, a rear camera 816, a wireless unit 817, and a system transmission path 818. The system transmission path 818 includes an address bus, a data bus, a control signal line, and the like. The processor 811, the main memory 812, the auxiliary storage device 813, the touch panel 814, the front camera 815, the rear camera 816, and the wireless unit 817 are connected to the system transmission path 818. The scanner 82 and the weighing scale 83 can be connected to the system transmission path 818 via an interface connection.

The processor 811 controls each part to realize various functions as the information processing device 81 in accordance with an operating system or an application program. The processor 811 is, for example, a central processing unit (CPU), but is not limited thereto. The processor 811 may be a multi-core/multi-threaded processor and can execute a plurality of processes in parallel. The processor 811 may also be implemented in various other forms including integrated circuits such as a GPU, an ASIC, an FPGA, and a DSP.

The main memory 812 includes a non-volatile memory area and a volatile memory area. The non-volatile memory area of the main memory 812 stores the operating system or the application program. The main memory 812 may store data necessary for the processor 811 to execute processes for controlling each part in a non-volatile or volatile memory area. The main memory 812 uses the volatile memory area as a work area where data may be rewritten by the processor 811. The non-volatile memory area is, for example, a ROM. The volatile memory area is, for example, a RAM.

Examples of an auxiliary storage device 813 include an EEPROM, an HDD, an SSD, and the like. The auxiliary storage device 813 stores data used by the processor 811 in performing various processes, or data generated by the processes in the processor 811. The auxiliary storage device 813 may store the above-mentioned application program. In this embodiment, as the application program, a terminal program 8131 for causing the information processing device 81, the scanner 82, and the weighing scale 83 to function as the information terminal 8 is stored. Note that the terminal program 8131 may be stored in the non-volatile memory area of the main memory 812.

The touch panel 814 is a device that serves as both an input device and a display device of the information terminal 8. The touch panel 814 displays an image based on image data output from the processor 811, detects a touch position on the displayed image, and provides the touch position information to the processor 811. As shown in FIG. 4, the information processing device 81 is attached to the cart 9 at a position and direction such that a customer who is pushing the cart 9 can view the display of the touch panel 814 and perform a touch operation.

The front camera 815 is disposed on the front surface of the information processing device 81. In this context, the front surface is the surface on which the touch panel 814 is disposed and which faces the customer. The rear camera 816 is a camera disposed on the rear surface of the information processing device 81. The front camera 815 captures an image of the customer's face (a customer's face image). The rear camera 816 captures an image of a basket receiving portion 91 of the cart 9 from above to acquire an image of the inside of a basket placed in the basket receiving portion 91, that is, an image of a purchased product placed into the basket.

The wireless unit 817 wirelessly communicates data with the access point 4 in accordance with a wireless communication protocol.

As shown in FIG. 4, the scanner 82 is attached to the cart 9 so a reading window faces the customer. The scanner 82 reads code symbols such as barcodes and two-dimensional data codes attached to products. A code symbol representing a product code is attached to a product. The scanner 82 outputs data of the read code symbol to the processor 811. The scanner 82 may be a type that reads the code symbol by scanning with a laser beam or may be a type that reads the code symbol from an image captured by an imaging device. Note that the scanner 82 can read not only the code symbols attached to the products, but also barcodes attached to membership cards, and the like, and output corresponding data to the processor 811. Thereby, the customer can input a member code using the scanner 82. In addition to the scanner 82 fixed to the cart 9, the information terminal 8 may also be equipped with a handheld scanner that can be removed and used when scanning large-sized products.

The information processing device 81 may also be equipped with a reader that reads data recorded on a recording medium and then outputs the read data to the processor 811. The reader can be a magnetic card reader for a magnetic card or an IC card reader for a contact IC card. In the reader may be a radio frequency identification (RFID) reader for a recording medium such as a contactless IC card or a smartphone. This reader can read a member code from a membership card. In some examples, such a reader may not be built into the information processing device 81, but may be in a separate housing and fixed to the cart 9, similar to the scanner 82.

As shown in FIG. 4, the weighing scale 83 is installed on the bottom surface of the basket receiving portion 91 of the cart 9. The weighing scale 83 measures the total weight of items placed in the basket receiving portion 91. When a basket is placed separately in the basket receiving portion, the weighing scale 83 measures the combined weight of the basket and the products placed therein, and outputs weight data to the processor 811.

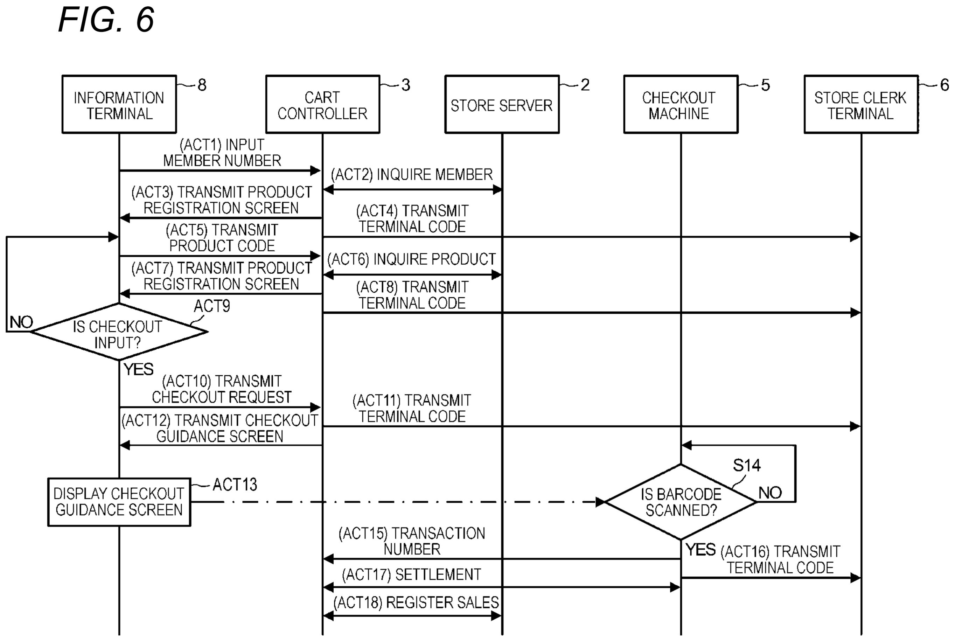

FIG. 6 is a sequence diagram showing an overview of the overall operation of the product sales system. Hereinafter, certain operations of the product sales system 1 when a member customer uses the information terminal 8 of the cart 9 to register purchased products and perform settlement by himself or herself will be described using the sequence diagram. Note that the specific operations described below are merely an example. As long as similar results are obtained, the procedure is not particularly limited.

In a standby state, the information terminal 8 displays a login screen on the touch panel 814. Note that in a standby state, the touch panel 814 may be turned off, and the login screen may be displayed when the customer using the cart 9 touches the touch panel 814.

The customer performs a login operation on the login screen and inputs his/her member number (ACT1). This input can be performed by reading the data from a membership card using the scanner 82 or other reader. The information terminal 8 transmits a login command including the member number and the terminal number of the information terminal 8 to the cart controller 3.

When the cart controller 3 receives a login command from an information terminal 8, the cart controller 3 checks whether the member number included in the login command matches a member (member account) in the store server 2 (ACT2). The store server 2 receives the member number inquiry from the cart controller 3 and authenticates the member number by reference to the member database 22, and returns an authentication result to the cart controller 3. When the member authentication is valid, the cart controller 3 registers the member number included in the login command as a member code in the information terminal table 31, which is prepared in the main memory 33, for the terminal number included in the login command is registered as a terminal code, and registers (generates) a unique transaction number. Note that, instead of preparing an information terminal table 31 for each information terminal 8 in the main memory 33, when member authentication is valid, the information terminal table 31 for the information terminal 8 may be generated, and the terminal code and the member code may be registered therein.

Then, the cart controller 3 next creates a product registration screen for the information terminal 8 and transmits it to the information terminal 8, thereby displaying the product registration screen on the touch panel 814 (ACT3). The cart controller 3 also transmits the terminal code of the information terminal 8 to the store clerk terminal 6 to indicate the start of use of the information terminal 8 on a store clerk monitoring screen on the display of the store clerk terminal 6 (ACT4).

After checking the product registration screen, the customer walks around the sales floor and places products he or she desires to purchase in the basket receiving portion 91 (or a basket therein) of the cart 9. Before placing the products in the basket, the customer uses the scanner 82 to read/scan the code symbols attached to the products. Products scanned and placed in the basket of the cart 9 may be referred to in the following description as purchased products, though payment may still be pending. When the code symbols are read by the scanner 82, product codes represented by the code symbols are input to the information terminal 8 (ACT5). That is, the customer registers the products by product codes on the information terminal 8. Note that, for a product that does not have a code symbol attached thereto, the product code may be input to the information terminal 8 by touching a product name or product image displayed on the touch panel 814. Each time the product registration operation is performed, the information processing device 81 transmits a product registration command including the product code read by the scanner 82 to the cart controller 3. In addition to the product code, the product registration command may also include the terminal number, the member number, the transaction number, or the like.

When the cart controller 3 receives the product registration command, the cart controller 3 checks the store server 2 using the product code included in the product registration command (ACT6). The store server 2 receives the product code from the cart controller 3, and returns the price, product name, and the like of the product corresponding to the product code to the cart controller 3 by reference to the product database 21. The cart controller 3 additionally generates a record including the product code in the product registration command and the price, product name, and the like returned from the store server 2 in the purchased product data area 314 of the information terminal table 31 that corresponds to the terminal number and transaction number included in the product registration command.

Thereafter, the cart controller 3 creates a product registration screen that has been updated based on the data of the newly registered purchased product, and transmits it to the information terminal 8, thereby displaying the updated product registration screen on the touch panel 814 (ACT7). The cart controller 3 also transmits the terminal code of the information terminal 8 to the store clerk terminal 6, thereby notifying the registration of a product on the store clerk monitoring screen of the store clerk terminal 6 (ACT8).

The product registration screen displayed on the information terminal 8 includes a checkout button that can be operated when the customer has completed the registering of products and desires to perform payment. The information terminal 8 can repeatedly register products until the checkout button is operated (ACT9). In this embodiment, the checkout button can only be operated once the information terminal 8 enters a preset checkout area in the store. The location of the information terminal 8 can be measured by, for example, the wireless unit 817 using Bluetooth^{®} Low Energy (BLE) or ultra wide band (UWB, ultra-wideband radio). The checkout area is where the checkout machine 5 is installed. The checkout area is also where store clerks called attendants are stationed to assist customers with checkout and to monitor customers for fraudulent behavior. It is preferable that the checkout area be clearly indicated in a form that allows customers to determine whether they are in the checkout area.

When the checkout button is operated (pressed), the information terminal 8 transmits a checkout request command including a terminal number, a member number, a transaction number, and the like to the cart controller 3 (ACT10). In response to receiving this checkout request command, the cart controller 3 can transmit a terminal number of the information terminal 8 to the store clerk terminal 6 (ACT11), thereby indicating that the information terminal 8 has been moved to the checkout area on the store clerk monitoring screen of the store clerk terminal 6. The cart controller 3 transmits the checkout request command (ACT12) to create and display a checkout guidance screen on the information terminal 8 (ACT13). The checkout guidance screen includes a checkout barcode that indicates a checkout code for identifying a customer who will perform checkout with the checkout machine 5, and a message that prompts the customer to cause the checkout barcode to be read by the scanner provided in the checkout machine 5. The checkout code includes the terminal number and transaction number included in the checkout request command.

When the checkout barcode on the checkout guidance screen displayed on the screen of the touch panel 814 of the information terminal 8 is scanned at the checkout machine 5, the checkout machine 5 decodes the barcode to acquire the terminal number and the transaction number (S14). The checkout machine 5 then transmits a transaction inquiry command including a checkout machine number for specifying the checkout machine 5, the terminal number (may be referred to as a terminal code), and the transaction number to the cart controller 3 (ACT15). In addition, the checkout machine 5 transmits the checkout machine number and terminal number to the store clerk terminal 6 (ACT16), the store clerk monitoring screen of the store clerk terminal 6 can indicate which checkout machine 5 is to be used by the information terminal 8 for checkout.

When the cart controller 3 receives the transaction inquiry command from the checkout machine 5, the cart controller 3 returns settlement data to the checkout machine 5, the settlement data includes the purchased product data stored in the purchased product data area 314 of the information terminal table 31 that corresponds to the terminal number and transaction number included in the transaction inquiry command. The checkout machine 5 receives the settlement data and can then execute a settlement process based on the settlement data (ACT17). Then, when the settlement process ends, the checkout machine 5 transmits a settlement end notification to the cart controller 3. This settlement end notification can include a terminal number and transaction number of the information terminal 8 related to the payment (settlement).

The cart controller 3 receives the settlement end notification and then registers the sales data in the sales database 23 of the store server 2 (ACT18). The cart controller 3 then deletes the registered contents of the member code area 312, the transaction number area 313, the purchased product data area 314, and the subtotal amount area 315 from the information terminal table 31.

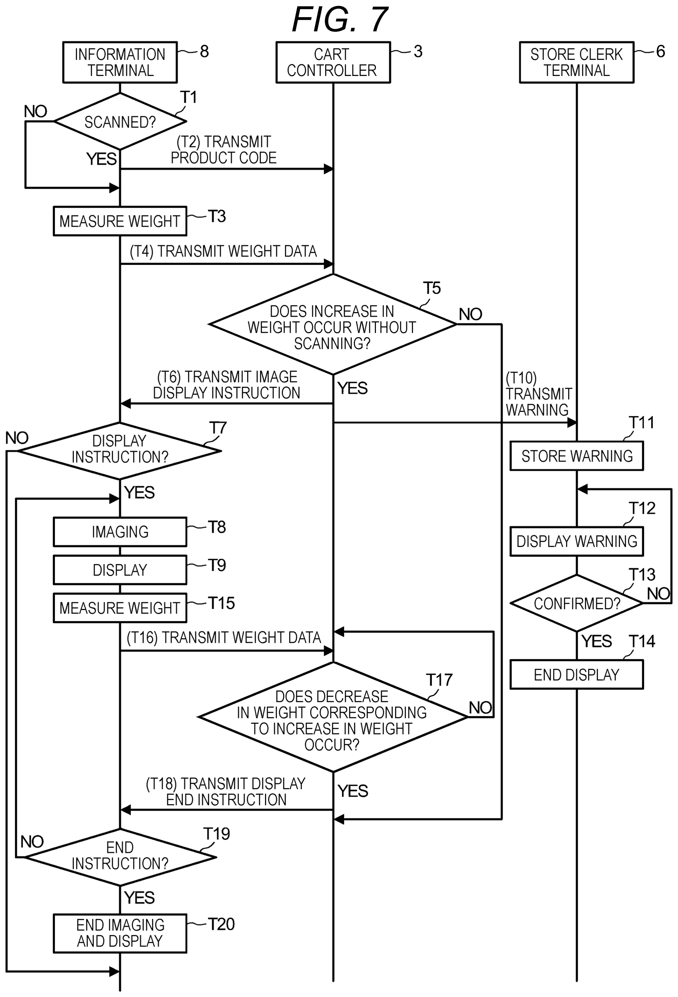

FIG. 7 is a sequence diagram showing an overview of an image display operation in the product registration system according to the first embodiment. Hereinafter, operations of the product registration system when a customer places a product into the cart 9 without scanning the product will be described using the sequence diagram of FIG. 7. Note that the operations described below are merely an example. As long as similar results are obtained, the procedure is not particularly limited.

As described in the overview of the overall operation of the product sales system 1, a product code can be read using the scanner 82 of the information terminal 8 (time T1). In addition, for a product that does not have a code symbol attached thereto, the product code can be input to the information terminal 8 by touching a product name or product image displayed on the touch panel 814 of the information terminal 8. When the information terminal 8 transmits (time T2)a product registration command including a product code to the cart controller 3, the cart controller 3 registers purchased product data for the product associated with the product code in an information terminal table 31 corresponding to the information terminal 8. As described in the overview of the overall operation of the product sales system 1, the cart controller 3 creates a product registration screen that is updated based on data of the registered purchased product and transmits it to the information terminal 8, thereby updated product registration screen is displayed on the touch panel 814 of the information processing device 81.

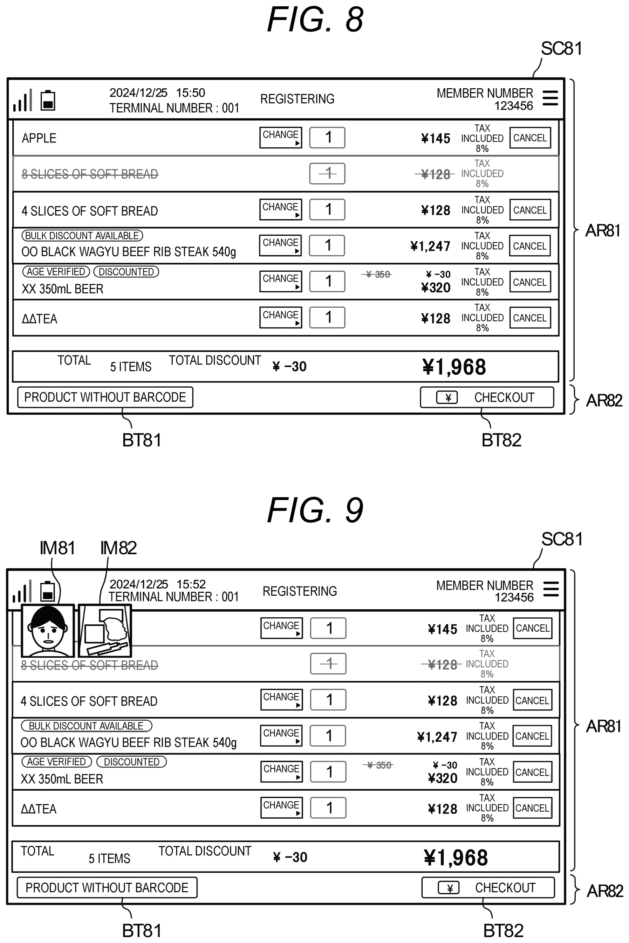

FIG. 8 is a schematic diagram showing an example of a product registration screen SC81 of the information terminal 8. The product registration screen SC81 includes an information presentation area AR81 and an operation area AR82. The information presentation area AR81 displays specific information such as a terminal number and a member number, a list of the registered products, and a total amount. The total amount corresponds to an amount stored in the subtotal amount area 315 of the information terminal table 31. Note that in FIG. 8, the total amount is shown as the sum of a product price and a tax amount, but the product price and the tax amount may be displayed separately. The operation area AR82 displays a [product without barcode] button BT81, which is touched when registering products that do not have code symbols attached thereto, such as fresh foods, and a [checkout] button BT82, which is operated when the customer ends registration and desires to perform payment.

Description will return to FIG. 7. If a product code is not acquired by scanning or the like (time T1-NO), the information terminal 8 measures a total weight on the basket receiving portion 91 by using the weighing scale 83 installed on the bottom surface of the basket receiving portion 91 of the cart 9 (time T3). The information terminal 8 transmits the weight data measured by the weighing scale 83 and measurement data including the terminal number of the information terminal 8 to the cart controller 3 (time T4).

The cart controller 3 stores a history of weight data measured for each information terminal 8 over a certain time period in the work area 331 of the main memory 33. The cart controller 3 determines whether an increase in weight occurs without a product scanning based on the history of the weight data, the received weight data, and the status of reception of the most recent product code (time T5). In other words, the cart controller 3 determines whether the customer operating the information terminal 8 places a product into the basket of the cart 9 without inputting a product code. When an increase in weight occurs with the input of the product code (time T5-NO), the cart controller does not execute anything in particular as a weight increase is expected after a product scanning or other product registration step.

On the other hand, when the weight increases without inputting a product code (time T5-YES), the cart controller 3 transmits an image display instruction to the information terminal 8 (time T6).

Upon receiving the image display instruction (time T7-YES), the information terminal 8 starts capturing an image using the front camera 815 and/or the rear camera 816 of the information processing device 81 (time T8), and displays the captured image on the product registration screen SC81 displayed on the touch panel 814 (time T9).

FIG. 9 is a schematic diagram showing an example of the product registration screen SC81. In FIG. 9, a face image IM81 of the customer, which was captured by the front camera 815, and a basket inside image IM82, captured by the rear camera 816, are displayed in a pop-up manner in the information presentation area AR81 of the product registration screen SC81. In this manner, both the face image IM81 and the basket inside image IM82 may be captured and displayed. In other examples, only one of the two images may be captured and displayed. Note that the face image IM81 and/or the basket inside image IM82 may be a moving image (video) or may be an updating still image (photograph) captured at regular time intervals, such as one second intervals.

By displaying an image captured in this manner on the screen, it is possible to notify the customer of a scanning omission and prevent the customer from making an inadvertent mistake of accidentally putting a product in the basket without scanning it, completing checkout, and leaving.

In addition, for customers who are intentionally attempting to commit fraudulent behavior, this image display can give the impression that they are being monitored, which tends to lead to prevention of fraudulent behavior.

Note that, with regard to the face image IM81, it is preferable to display an image of the customer looking forward and showing the customer's face most clearly or with the best distinguishing feature among some still images captured over a predetermined period, rather than displaying the face of a customer looking to the side or behind them. Selection of such an image from among a plurality of still images of faces can be achieved, for example, by using facial feature data detection or AI. Regarding the face image IM81, images acquired by the front camera 815 may be sequentially displayed until such an image is obtained, and after such an image is obtained, the image may be displayed as a fixed image. In addition, such a still image may be cut out (extracted) from a moving image captured over a predetermined period.

Description will return to FIG. 7. When the weight increases without inputting of a product code (time T7-YES), the cart controller 3 transmits an image display instruction to the information terminal 8 as described above, and also transmits, to the store clerk terminal 6, warning information including the terminal code of the information terminal 8 that received such an image display instruction (time T10).

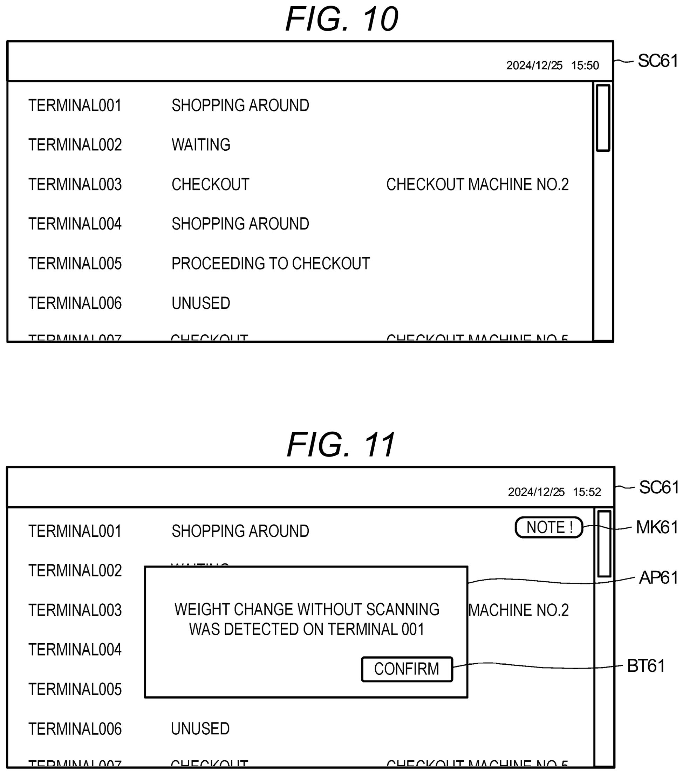

FIG. 10 is a schematic diagram showing an example of the display of a store clerk monitoring screen SC61 at the store clerk terminal 6. As described in the overview of the overall operation of the product sales system 1, the store clerk monitoring screen SC61 acquires, based on terminal codes transmitted from the cart controller 3 and each checkout machine 5, information such as the usage status of each information terminal 8 and, when the current location of the information terminal 8 is within a checkout area, the checkout machine number being used, and presents such information to the store clerk by displaying it on the store clerk monitoring screen SC61.

When the store clerk terminal 6 receives the warning information from the cart controller 3, the store clerk terminal 6 stores it (time T11) and displays a warning on the store clerk monitoring screen SC61 (time T12). FIG. 11 is a schematic diagram showing an example of the store clerk monitoring screen SC61 on the store clerk terminal 6. The store clerk terminal 6 identifies, by using a terminal code included in the warning information, an information terminal 8 for which an increase in weight occurs without the inputting of a product code. Then, the store clerk terminal 6 displays a warning pop-up AP61 in a pop-up manner on the store clerk monitoring screen SC61 as shown in FIG. 11. The warning pop-up AP61 includes a message indicating which information terminal 8 a weight change without scanning was detected, and a [confirm] button BT61. Furthermore, the store clerk terminal 6 displays a warning mark MK61 in association with the specified information terminal 8 on the store clerk monitoring screen SC61.

When the store clerk touches the [confirm] button BT61 (T13-YES), the store clerk terminal 6 ends the display of the warning pop-up AP61 (time T14). However, the display of the warning mark MK61 is continued. The store clerk terminal 6 can continue to display the warning mark MK61 based on the stored warning information.

The information terminal 8 measures a weight using the weighing scale 83 while displaying the face image IM81 and/or the basket inside image IM82 (time T15), and transmits measurement data, including the measured weight data, to the cart controller 3 (time T16).

The cart controller 3 determines whether a decrease in weight corresponding to the previous increase in the weight of an unscanned product occurs by using the history of the stored weight data and the newly received weight data (time T17). In other words, the cart controller 3 determines whether the customer removes the unscanned product from basket of the cart 9. Removing the unscanned product from the basket can be assumed to mean that the customer will now execute a registration operation on that product or return the product to the shelf. The cart controller 3 performs this determination each time it receives weight data from the information terminal 8 after the image display instruction was transmitted.

When a decrease in weight corresponding to the previous increase in the weight of an unscanned product occurs (time T17-YES), the cart controller 3 transmits a display end instruction to the information terminal 8 (time T18).

When the information terminal 8 receives the display end instruction (time T19-YES), it stops capturing images using the front camera 815 and/or the rear camera 816, and ends the display of the face image IM81 and/or the basket inside image IM82 on the product registration screen SC81 (time T20).

The image display operation in such a product registration system can be repeatedly executed until the [checkout] button BT82 on the product registration screen SC81 is touched.

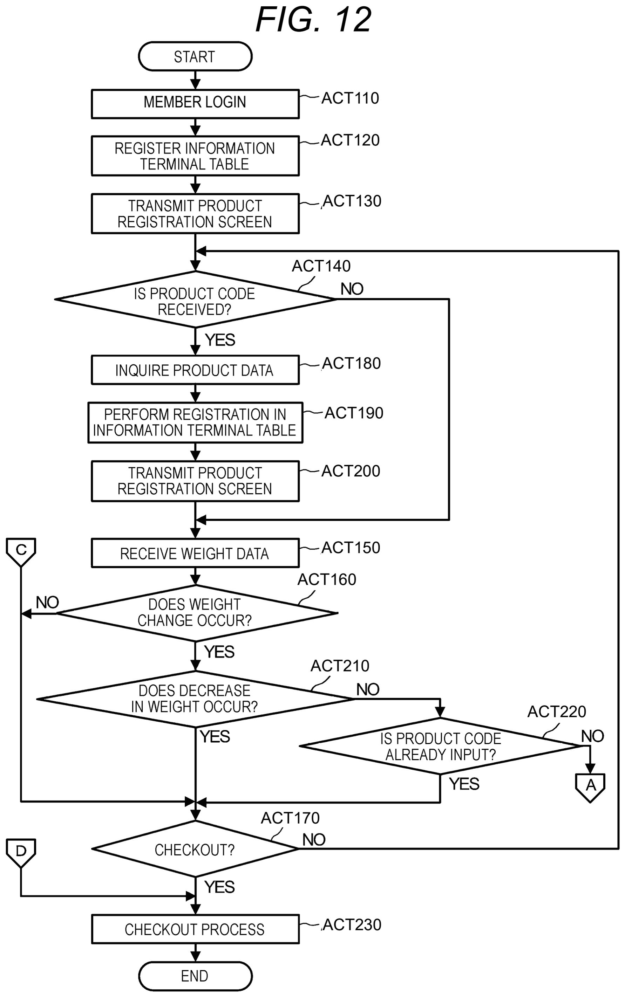

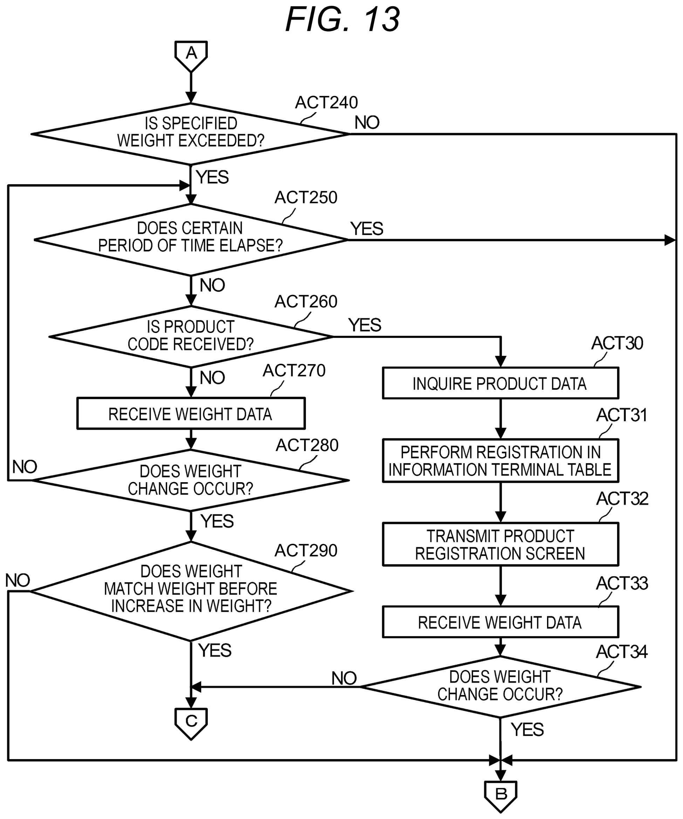

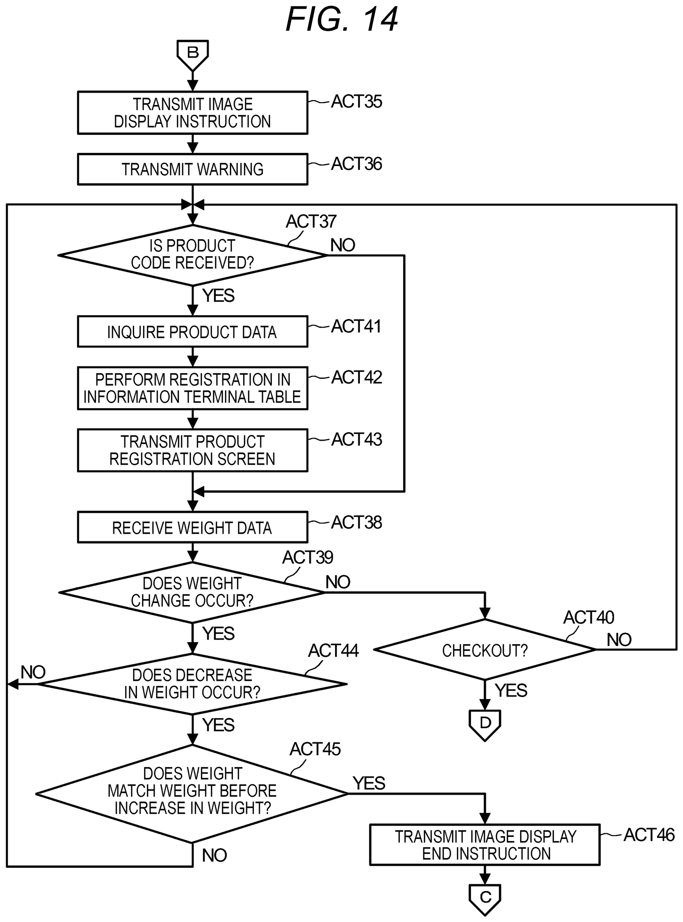

FIGS. 12 to 14 are a series of flowcharts of information processing procedures executed by the processor 32 of the cart controller 3 in accordance with the cart control program 341. Description will be given of operations when a customer uses the information terminal 8 of a cart 9 to register purchased products and perform settlement by himself or herself. Note that operations described below are merely an example. The procedures are not particularly limited as long as similar results can be obtained.

First, in ACT110, the processor 32 receives, from an information terminal 8, a login command including a member number corresponding to a login operation on the information terminal 8 and the terminal number of the terminal. The processor 32 confirms the member number included in the login command corresponds to a member listed in the store server 2 in ACT110. When the processor 32 receives, from the store server 2, a response indicating that member authentication is valid, the processor 32 proceeds to ACT120. However, when the processor 32 receives, from the store server 2, a response indicating that member authentication is invalid, the processor 32 transmits a denial response to the information terminal 8, and ends the operation shown in this flowchart.

In ACT120, the processor 32 registers a member code and a transaction number in the information terminal table 31 corresponding to the information terminal 8 that transmitted the login command. Specifically, the processor 32 registers, as a member code, the member number included in the login command in the information terminal table 31 for the terminal number (terminal code) included in the login command, and generates a unique transaction number. Thereafter, the processor 32 proceeds to ACT130.

In ACT 130, the processor 32 generates data of a product registration screen and transmits it to the information terminal 8. The product registration screen SC81 is thus displayed on the touch panel 814 of the information processing device 81 of the information terminal 8. Thereafter, the processor 32 proceeds to ACT140.

In ACT140, the processor 32 checks whether a product registration command including a product code is received from the information processing device 81. When a product registration command including a product code is received, the processor 32 determines YES in ACT140 and proceeds to ACT180. When it is determined that a product registration command including a product code is not received, the processor 32 determines NO in ACT140 and proceeds to ACT150.

In ACT150, the processor 32 receives weight measurement data from the information terminal 8. Thereafter, the processor 32 proceeds to ACT160.

In ACT160, the processor 32 compares a history of weight data stored in the work area 331 of the main memory 33 over a predetermined period with the received weight data, and determines whether a weight change occurs. When it is determined that a weight change occurs, the processor 32 determines YES in ACT160 and proceeds to ACT210. When it is determined that a weight change does not occur, the processor 32 determines NO in ACT160 and proceeds to ACT170.

In ACT170, the processor 32 determines whether a checkout request command is received from the information terminal 8 (a touch operation on the [checkout] button BT82 on the product registration screen SC81). When a checkout request command is received, the processor 32 determines YES in ACT170 and proceeds to ACT230. When a checkout request command is not received, the processor 32 determines NO in ACT170 and proceeds to ACT140.

In this manner, the processor 32 repeats ACT140 to ACT170 to wait for one of a reception of a product registration command, a weight change indication, or a checkout request command.

When the processor 32 determines that a product registration command including a product code has been received in ACT140, the processor 32 checks the store server 2 for corresponding product information in ACT180 by using the product code included in the received product registration command. Thereby, the processor 32 acquires the price, product name, and the like of the product corresponding to the product code from the store server 2. Thereafter, the processor 32 proceeds to ACT190.

In ACT190, the processor 32 registers a record to the purchased product data area 314 of the information terminal table 31, the record includes the product code included in the product registration command, and the price, product name, and the like acquired from the store server 2. Thereafter, the processor 32 proceeds to ACT200.

In ACT200, the processor 32 generates data of an updated product registration screen to reflect the updated information terminal table 31, and transmits it to the information terminal 8. Thereby, the information terminal 8 displays the updated product registration screen SC81 on the touch panel 814. Thereafter, the processor 32 proceeds to ACT150.

A customer inputs a product code of a purchased product via the information terminal 8 and places the purchased product into a basket placed on the cart 9. The weight measured by the weighing scale 83 increases when the product is placed in the basket, and thus the processor 32 determines in ACT160 that a weight change occurs. In this case, the processor 32 next checks in ACT210 whether the weight change is a decrease. When it is determined that the weight change is not a decrease, that is, it is determined that the weight change is an increase, the processor 32 determines NO in ACT210 and proceeds to ACT220.

Note that a customer may also remove a registered product from the basket. In such a case, the customer generally must perform a cancellation process via the information terminal 8 to de-register (cancel) the product, remove the cancelled product from the basket, and then return it to the original shelf location or the like. The operation of the cart controller 3 in this cancellation process is known, and thus additional description thereof will be omitted here. In the present case, the value of weight data measured by the weighing scale 83 decreases when a cancelled product is removed from the basket. Thus, the processor 32 determines in ACT210 that the weight decreases. In this case, the processor 32 determines YES in ACT210 and proceeds to ACT170.

In ACT220, the processor 32 determines whether a product code was received within a specified time period before the weight increases, that is, whether the weight increase is deemed to occur in conjunction with a scanning or without a scanning of a product. When it is determined that a product code is not received within the specified time period, that is, it is determined that the weight increases without a scanning, and the processor 32 determines NO in ACT220, then proceeds to ACT250. When it is determined that a product code is received in the specified time period, that is, it is determined that the weight increases with a scanning, the processor 32 determines YES in ACT220 and proceeds to ACT170.

After the purchased product is correctly registered in this manner, the customer touches the [checkout] button BT82 on the product registration screen SC81 of the information terminal 8 to proceed to payment. Thereby a checkout request command is transmitted from the information terminal 8, and thus the processor 32 determines in ACT 170 that the checkout request command has been received. In this case, the processor 32 executes a checkout process in ACT230. In this checkout process, the processor 32 creates a checkout guidance screen and transmits it to the information terminal 8. Thereafter, in response to the transaction inquiry command from the checkout machine 5, the processor 32 transmits, to the checkout machine 5, settlement data including purchased product data stored in the purchased product data area 314 of the information terminal table 31 that corresponds to the terminal number and transaction number included in the transaction inquiry command. Then, when the processor 32 receives a settlement end notification from the checkout machine 5, the processor 32 registers sales data in the sales database 23 of the store server 2. Thereafter, the processor 32 deletes the registered contents of the member code area 312, transaction number area 313, purchased product data area 314, and subtotal amount area 315 in the information terminal table 31.

When the checkout process ends, the processor 32 ends the series of processes related to the information terminal 8.

Note that, when a product is heavy, the customer may place the product into the basket before scanning a code symbol attached to the product, and the code symbol of the product stored in the basket may be read by a handheld scanner. In such a case, it is not preferable to display an image assuming that an unscanned product has been placed into the basket. Consequently, the processor 32 can execute a process to handle such a case.

That is, when the processor 32 determines in ACT220 that a product code has not been received within a specified time period in conjunction with a weight increase, the processor 32 checks in ACT240 whether the increased weight exceeds a preset specified weight, that is, whether a product is heavy. When the specified weight is not exceeded, the processor 32 determines NO in ACT240 and proceeds to ACT35. When the specified weight is exceeded, the processor 32 determines YES in ACT240 and proceeds to ACT250.

In ACT250, the processor 32 checks whether a certain period of time elapses after the weight increase. This certain period of time is a period of time assumed to be required after placing the product into the basket for the scanning of the product in the basket, for example, approximately 5 seconds may be adopted. When it is determined that the period of time has elapsed, the processor 32 determines YES in ACT250 and proceeds to ACT35. When time has not yet elapsed, the processor 32 determines NO in ACT250 and proceeds to ACT260.

In ACT260, the processor 32 checks whether a product registration command including a product code has been received from the information processing device 81. When a product registration command including a product code is received, the processor 32 determines YES in ACT260 and proceeds to ACT30. When a product registration command including a product code is not yet received, the processor 32 determines NO in ACT260 and proceeds to ACT270.

In ACT270, the processor 32 receives e weight data transmitted from the information terminal 8. Thereafter, the processor 32 proceeds to ACT280.

In ACT280, the processor 32 compares a history of the weight data stored in the work area 331 to the received weight data to determine whether a weight change has occurred. When a weight change has not occurred, the processor 32 determines NO in ACT280 and returns to ACT250. When it is determined that a weight change occurred, the processor 32 determines YES in ACT280 and proceeds to ACT290.

In ACT290, the processor 32 checks whether the just received weight, matches the weight before it was determined in ACT160 that a weight change occurred. When it is determined that the previous and current weights match, the processor 32 determines YES in ACT290 and returns to ACT 170. That is, when the weights match, this means that a product whose product code was not input has been removed from the basket, and thus the processor 32 returns to the loop processing of ACT140 to ACT170. If it is determined that these weights do not match, the processor 32 determines NO in ACT290 and proceeds to ACT35. That is, when the weights do not match, this means that a product whose product code was input has been cancelled. In such a case, after executing a cancellation process, the processor 32 proceeds to ACT35, similar to when a certain period of time elapses in ACT250.

In addition, when it is determined in ACT260 that a product code was input, the processor 32 inquires of the store server 2 for corresponding product information using the product code included in the received product registration command in ACT30, and thus acquires the price, product name, and the like of the product that corresponds to the product code from the store server 2. Thereafter, the processor 32 proceeds to ACT31.

In ACT31, the processor 32 registers a record including the product code included in the product registration command and the price, product name, and the like acquired from the store server 2 in the purchased product data area 314 of the information terminal table 31. Thereafter, the processor 32 proceeds to ACT32.

In ACT32, the processor 32 generates data of an updated product registration screen, and transmits this to the information terminal 8. Thereby, the updated product registration screen SC81 is displayed on the touch panel 814 of the information processing device 81. Thereafter, the processor 32 proceeds to ACT33.

In ACT33, the processor 32 receives weight data transmitted from the information terminal 8. Thereafter, the processor 32 proceeds to ACT34.

In ACT34, the processor 32 compares a history of the weight data stored in the work area 331 of the main memory 33 with the received weight data to determine whether a weight change occurred. When it is determined that a weight change has not occurred, the processor 32 determines NO in ACT34 and returns to ACT170. The processor 32 returns to the loop processing of ACT140 to ACT170. When it is determined that a weight change occurs, the processor 32 determines YES in ACT34 and proceeds to ACT35. That is, when product data is input and a weight change also occurs, this means that the product code of a different product may have been input instead of the product code of the product that was placed into the basket. Thus, in such a case, the processor 32 proceeds to ACT35, similar to when a certain period of time elapses in ACT25.

In ACT35, the processor 32 transmits an image display instruction to the information terminal 8. Thereby, the information terminal 8 starts capturing an image using the front camera 815 and/or the rear camera 816 of the information processing device 81, and displays the captured image in a pop-up manner on the product registration screen SC81 displayed on the touch panel 814 as the face image IM81 and/or the basket inside image IM82. Thereafter, the processor 32 proceeds to ACT36.

In ACT36, the processor 32 transmits warning information including the terminal code of the information terminal 8 to which the image display instruction was given to the store clerk terminal 6. Thereby the store clerk terminal 6 warns the store clerk by displaying the warning pop-up AP61 in a pop-up manner on the store clerk monitoring screen SC61 displayed on the display. Thereafter, the processor 32 proceeds to ACT37.

In ACT37, the processor 32 determines whether a product registration command including a product code is received from the information processing device 81. When a product registration command including a product code is received, the processor 32 determines YES in ACT37 and proceeds to ACT45. When a product registration command including a product code is not received, the processor 32 determines NO in ACT37, and proceeds to ACT38.

In ACT38, the processor 32 receives weight data transmitted from the information terminal 8. Thereafter, the processor 32 proceeds to ACT39.

In ACT39, the processor 32 compares a history of the weight data stored in the work area 331 of the main memory 33 with the received weight data to determine whether a weight change occurs. When it is determined that a weight change occurs, the processor 32 determines YES in ACT39 and proceeds to ACT44. When it is determined that a weight change does not occur, the processor 32 determines NO in ACT39 and proceeds to ACT40.

In ACT40, the processor 32 determines whether a checkout request command has been received from the information terminal 8. When a checkout request command is received, the processor 32 determines YES in ACT40 and proceeds to ACT23. In this manner, for this present embodiment, proceeding to payment is permitted even when a product stored into the basket remains without its product code being input. However, in other examples, when there is such an unregistered product, proceeding to payment may be denied or blocked. When a checkout request command is not received, the processor 32 determines NO in ACT40 and proceeds to ACT37.

In this manner, the processor 32 repeats ACT37 to ACT40 to wait for the occurrence of the reception of a product registration command including a product code, a weight change indication, or a checkout request command.

When it is determined in ACT37 that a product code is input, the processor 32 inquires in ACT41 of the store server 2 for product information matching the product code included in the received product registration command, and thus acquires the price, product name, and the like of the product that corresponds to the product code from the store server 2. Thereafter, the processor 32 proceeds to ACT42.

In ACT42, the processor 32 registers a record to the purchased product data area 314 of the information terminal table 31, the record includes the product code in the product registration command, and the price, product name, and the like acquired from the store server 2. Thereafter, the processor 32 proceeds to ACT43.

In ACT43, the processor 32 generates data for an updated product registration screen in accordance with the data of the purchased products in the purchased product data area 314 of the updated information terminal table 31, and transmits it to the information terminal 8. Thereby, the information terminal 8 displays the updated product registration screen SC81 on the touch panel 814. In this case, the face image IM81 and/or the basket inside image IM82 displayed in a pop-up manner on the product registration screen SC81 continues to be displayed. This is because it is unclear at this point whether product data that was newly registered for the product stored in the basket matches the product code that was input. Thereafter, the processor 32 proceeds to ACT38.

In this manner, in this embodiment, an operation for registering a product is still permitted while the face image IM81 and/or the basket inside image IM82 is being displayed in a pop-up manner on the product registration screen SC81.

When it is determined in ACT39 that a weight change occurs, the processor 32 next checks in ACT44 whether the weight change is a decrease. When the weight change is an increase, the processor 32 determines NO in ACT44 and proceeds to ACT37. An increase in weight without receiving a product registration command including a product code may occur when another product is placed into the basket of the cart 9 with or without a registration operation. Even when a product without a registration operation, that is, a product without a product code being input, is placed into the basket of the cart 9, the face image IM81 and/or the basket inside image IM82 is displayed in a pop-up manner on the product registration screen SC81 of the information terminal 8, and the warning pop-up AP61 is displayed in a pop-up manner on the store clerk monitoring screen SC61 of the store clerk terminal 6. Thus, the processor 32 proceeds to ACT37 without performing anything in particular. In ACT44, when the weight change is a decrease, the processor 32 determines YES and proceeds to ACT45.

In ACT45, the processor 32 determines whether the received weight, matches a previous weight before the weight change detected in ACT 160 occurred. When it is determined that these weights do not match, the processor 32 determines NO in ACT45 and proceeds to ACT37. That is, when these weights do not match, this means that a product whose product code was input is being canceled. In such a case, after executing a cancellation process, the processor 32 proceeds to ACT37. When these weights match, the processor 32 determines YES in ACT45 and proceeds to ACT46.

In ACT46, the processor 32 transmits an image display end instruction to the information terminal 8. Thereby, the information terminal 8 ends imaging by the front camera 815 and/or the rear camera 816, and ends the pop-up display of the face image IM81 and/or the basket inside image IM82 on the product registration screen SC81. At this time, the processor 32 may notify the store clerk terminal 6 that the image display on the information terminal 8 ends. Thereafter, the processor 32 proceeds to ACT170.

In ACT45, when the received weight matches the weight before ACT160, this means that the product that was put into the basket without a product code being input has been removed from the basket. The removed product may be returned to the original shelf or may be registered by reading a code symbol attached to the product. The processor 32 enables the latter registration operation by returning to the loop processing of ACT140 to ACT170.

The cart controller 3, which functions as an information management server in the product registration system of this embodiment, includes the network interface 35 which is an example of a communication interface for communicating with the information terminal 8, which is an example of a product registration terminal for registering products while a customer is shopping around a sales floor, and the processor 32. In response to receiving a product code, which is identification information of a product acquired by the information terminal 8, the processor 32 registers the product in the information terminal table 31 as a purchased product, and controls whether at least one of the face image IM81, which is an example of a customer's face image captured by the front camera 815 and/or the rear camera 816 of the information terminal 8, and the basket inside image IM82, which is an example of an image of products stored in the basket placed on the cart 9 to which the information terminal 8 is attached, is displayed on the touch panel 814 of the information terminal 8.

In this manner, the cart controller 3, can display at least one of the face image IM81 and the basket inside image IM82 on the touch panel 814 of the information terminal 8, giving customers the impression that they are being monitored. Thus, according to this embodiment, when customers themselves register products, it is possible to provide an information management server that can reduce fraudulent behavior in which customers leave the store without registering products and paying for them.

Here, the processor 32 determines whether a product whose product code is not yet received has been placed into the cart 9 based on the reception status of the product code of the product and the weight data of the product placed into the cart 9, and when a product whose product code is not yet received is placed into the cart 9, the processor 32 performs control so that at least one of the face image IM81 and the basket inside image IM82 is displayed on the touch panel 814 of the information terminal 8.

In this manner, when a customer intentionally or inadvertently places a product into the basket without registering the product, the face image IM81 and/or the basket inside image IM82 is displayed on the information terminal 8, giving customers who place products into the basket without intentionally registering the products the impression that they are being monitored, and thus discourages them from committing fraudulent behavior. Furthermore, for customers who unintentionally and inadvertently forget to register products and place the products into the basket, the inadvertent mistakes can be pointed out. Thus, it is possible to reduce fraudulent behavior in which customers leave the store without registering the products and paying for them when the customers themselves register products.

Note that, as shown in FIG. 9, the processor 32 displays the customer's face image and/or the image of products placed into the cart 9 on the touch panel 814, which is an example of a display of the information terminal 8 so that the image is superimposed on a list of registered products.

With such display, a customer who inadvertently forgets to register a product and places the product into the basket can easily determine which product has been forgotten to be registered by comparing the displayed contents with the products actually in the basket.

In addition, the communication interface further communicates with the store clerk terminal 6, which presents information to the store clerk, and the processor 32 further notifies the store clerk that a product whose product code is not yet received is placed into the basket placed on the cart 9.

In this manner, the store clerk can be notified of the occurrence of a situation in which a product whose product code is not yet received is placed into the basket, and thus the store clerk can monitor the behavior of the relevant customer particularly carefully when the customer performs checkout.

Further, in the product registration system according to this embodiment, the information terminal 8 functions as a product registration terminal that performs a registration operation for products while a customer is shopping on a sales floor, and the cart controller 3 functions as an information management server that registers a purchased product in response to the registration operation on the information terminal 8 and displays the product registration screen SC81 showing the registered contents of the purchased product on the touch panel 814, which is an example of a display of the information terminal 8. The processor 32 of the cart controller 3 functions as a display control unit that controls whether at least one of the face image IM81, which is an example of a face image of a customer captured by the front camera 815 and/or the rear camera 816 of the information terminal 8, and the basket inside image IM82, which is an example of an image of a product stored in the basket placed on the cart 9 to which the information terminal 8 is attached, is displayed on the touch panel 814 of the information terminal 8, and functions as a transmission unit that transmits warning information to the store clerk terminal 6 when switching is performed between display-on and display-off of the face image IM81 and/or the basket inside image IM82 on the touch panel 814 of the information terminal 8.

In this manner, in the product registration system according to this embodiment, at least one of the face image IM81 and the basket inside image IM82 can be displayed on the touch panel 814 of the information terminal 8, and thus the customer can be given the impression that he or she is being monitored. In addition, since the store clerk can be notified of the occurrence of a situation in which a product whose product code is not yet received is placed into the basket, the store clerk can monitor the behavior of the relevant customer particularly carefully when the customer performs checkout. Thus, according to this embodiment, it is possible to provide an information management server that can reduce fraudulent behavior in which customers leave a store without registering their products and paying for them.

### Second Embodiment

In the first embodiment, it is detected that an unregistered product is placed into the basket, and the face image IM81 and/or the basket inside image IM82 are displayed on the information terminal 8. However, in this second embodiment, the face image IM81 and/or the basket inside image IM82 are also displayed when the information terminal 8 is started to be used.

A product registration system according to this second embodiment and a product sales system 1 to which the product registration system is applied are configured in much the same manner as in the first embodiment, excepting that the information terminal 8 does not include the weighing scale 83. The processing operations of the cart controller 3 and the information terminal 8 differ somewhat from those in the first embodiment as weight data is not utilized. In the following, those aspects which are substantially the same as in the first embodiment are given the same reference numerals as those in the first embodiment, and description of such aspects may be omitted to focus on differences from the first embodiment.

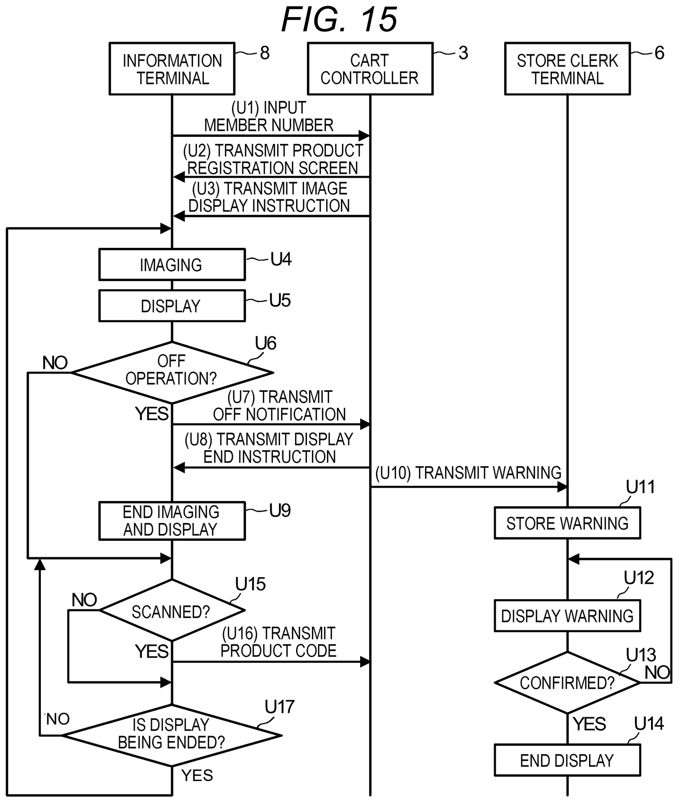

FIG. 15 is a sequence diagram showing an overview of an image display operation in the product registration system according to the second embodiment. Operations of the product registration system in the second embodiment will be described using FIG. 15. Note that specific operations described below are merely an example. As long as similar results are obtained, the procedure is not particularly limited.

As in the first embodiment, in response to a customer's login operation, the information terminal 8 transmits a login command including a member number and a terminal number of the terminal to the cart controller 3 (U1). The login command from the information terminal 8 is authenticated by the store server 2 and the cart controller 3 registers a member code and a transaction number in the information terminal table 31 corresponding to the terminal number. The cart controller 3 then creates a product registration screen and transmits it to the information terminal 8 for displaying the product registration screen on the touch panel 814 of the information processing device 81 (U2).

Furthermore, in this second embodiment, the cart controller 3 also transmits an image display instruction to the information terminal 8 (U3).

Upon receiving this image display instruction, the information terminal 8 starts capturing an image by the front camera 815 and/or the rear camera 816 of the information processing device 81 (U4) and displays the captured image on the product registration screen SC81 displayed on the touch panel 814 (U5).

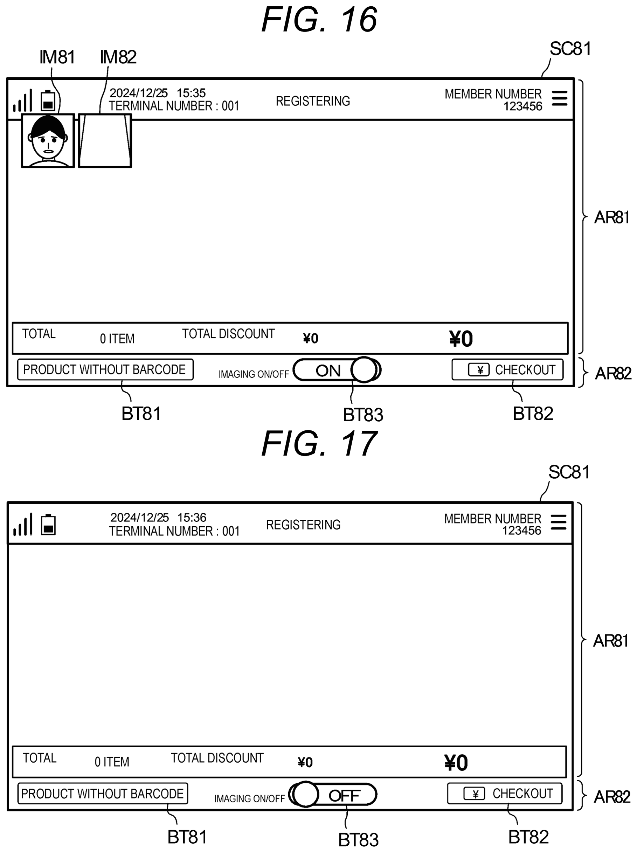

FIG. 16 is a schematic diagram showing an example of the product registration screen SC81 of the information terminal 8. In this second embodiment, a switch button BT83 for selecting display-on/display-off of the face image IM81 and/or the basket inside image IM82 is displayed in the operation area AR82 of the product registration screen SC81. The information terminal 8 is set to display the face image IM81 and/or the basket inside image IM82 by default. Thus, in the product registration screen SC81 that is displayed first after logging in, as shown in FIG. 16, the switch button BT83 is in a display format that indicates display-on, and the face image IM81 and/or the basket inside image IM82 is displayed.

Description will return to FIG. 15. Thereafter, the customer then shops around. Unless an off operation is performed, the following process is performed. That is, assuming an off operation is not performed (U6-NO), a product code can be read using the scanner 82 of the information terminal 8 (U15). For products without a code symbol, the customer touches the [product without barcode] button BT81 in the operation area AR82 to display a product name and a product image, and then touches the corresponding product, thereby inputting the product code into the information terminal 8. In either input case, the product code is transmitted to the cart controller 3 (U16). After the information terminal 8 transmits a product registration command including the product code to the cart controller 3, the cart controller 3 registers purchased product data for the product along with the product code in the information terminal table 31 corresponding to the information terminal 8. As described in the overview of the overall operation of the product sales system 1 in the first embodiment, the cart controller 3 creates a product registration screen that is updated based on the data of the registered purchased product and transmits it to the information terminal 8, thereby displaying the updated product registration screen on the touch panel 814.

During the shopping-around period, the display of the face image IM81 and/or the basket inside image IM82 on the information terminal 8 is continued, unless the customer touches the switch button BT83 on the product registration screen SC81 to turn off display the face image IM81 and/or the basket inside image IM82, that is, unless an off operation is performed (U17-YES, via U6).

For customers who do not desire the display of the face image IM81 and/or the basket inside image IM82, that is, who do not desire imaging by the front camera 815 and/or the rear camera 816, these customers may be considered those who are likely to commit fraudulent behavior or who are very sensitive to privacy concerns. Some customers may consider the image displayed on the product registration screen SC81 to be an obstruction and so touch the switch button BT83 to end the display of the face image IM81 and/or the basket inside image IM82.

Whenever an off operation is performed by touching the switch button BT83 (U6-YES), the information terminal 8 transmits an off notification including the terminal number to the cart controller 3 (U7).

The cart controller 3 transmits a display end instruction to the information terminal 8 in response to receiving the off notification (U8).

When the display end instruction is received, the information terminal 8 ends image capturing using the front camera 815 and/or the rear camera 816, and ends the display of the face image IM81 and/or the basket inside image IM82 on the product registration screen SC81 (U9).

FIG. 17 is a schematic diagram showing an example of the product registration screen SC81 of the information terminal 8. As shown in FIG. 17, the display of the face image IM81 and/or the basket inside image IM82 in the information presentation area AR81 of the product registration screen SC81 is ended. In addition, the switch button BT83 in the operation area AR82 is changed to a display form indicating display-off.

Description will return to FIG. 15. In response to receiving the off notification, the cart controller 3 not only transmits the display end instruction to the information terminal 8, but also transmits warning information (including the terminal code of the information terminal 8) to the store clerk terminal 6 (U10), the warning information indicates that the image display on the information terminal 8 has been ended.

When the store clerk terminal 6 receives the warning information from the cart controller 3, it stores the warning information (U11) and displays a warning on the store clerk monitoring screen SC61 (U12). This warning display may include the warning pop-up AP61 and the warning mark MK61, as in the first embodiment. However, in this case, the content of the warning pop-up AP61 is a message indicating at which information terminal 8 the image display has been ended.

After the store clerk touches the [confirm] button BT61 (U13-YES), the store clerk terminal 6 ends the display of the warning pop-up AP61 (U14). However, the display of the warning mark MK61 is continued. The store clerk terminal 6 can continue to display the warning mark MK61 based on the stored warning information.

Such an image display operation in the product registration system can be repeatedly executed until the [checkout] button BT82 on the product registration screen SC81 is touched.

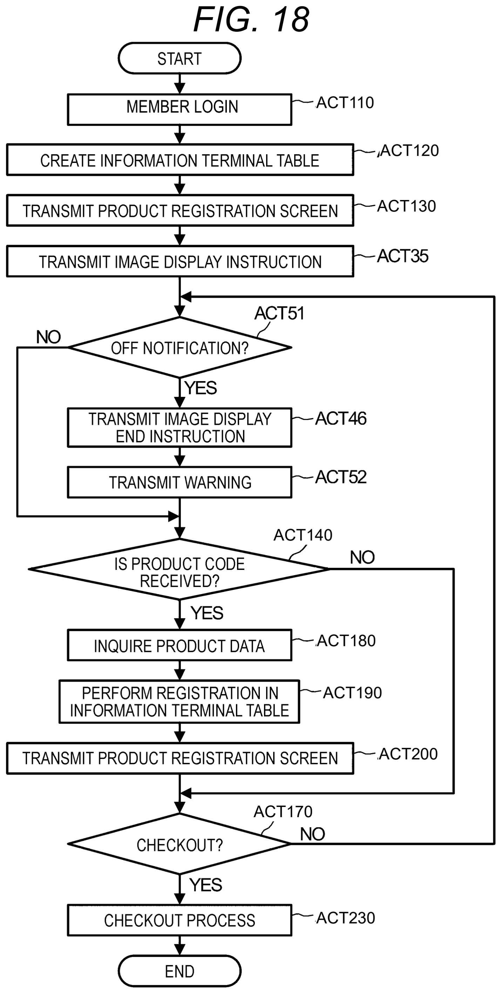

FIG. 18 is a flowchart showing information processing procedures executed by the processor 32 of the cart controller 3 in accordance with the cart control program 341 according to this second embodiment. Note that operations described below are merely an example. The procedures are not particularly limited as long as similar results can be obtained.

When the processor 32 receives, from an information terminal 8, a login command including a member number corresponding to a login operation on the information terminal 8 and the terminal number of the terminal, the processor 32 executes ACT110 to ACT130 as described for the first embodiment. That is, in ACT110, the processor 32 checks the store server 2 for a valid (authentic) member account using the member number included in the login command. In ACT120, the processor 32 registers a member code and a transaction number in the information terminal table 31. Then, in ACT130, the processor 32 generates data of a product registration screen and transmits it to the information terminal 8. Thereafter, in this second embodiment, the processor 32 proceeds to ACT35. In ACT35, the processor 32 transmits an image display instruction to the information terminal 8 as described in the first embodiment. Thereafter, the processor 32 proceeds to ACT51.

In ACT51, the processor 32 checks whether an off notification including a terminal number has been received from the information terminal 8. When an off notification is received, the processor 32 determines YES in ACT51 and proceeds to ACT46. If an off notification is not received, the processor 32 determines NO in ACT51 and proceeds to ACT140.

In ACT140, the processor 32 determines whether a product registration command including a product code has been received from the information processing device 81. When a product registration command is received, the processor 32 determines YES in ACT140 and proceeds to ACT180. When a product registration command is not received, the processor 32 determines NO in ACT140 and proceeds to ACT170 in this second embodiment.

In ACT170, the processor 32 determines whether a checkout request command has been received from the information terminal 8. When a checkout request command is received, the processor 32 determines YES in ACT170 and proceeds to ACT230. When a checkout request command is not received, the processor 32 determines NO in ACT170 and proceeds to ACT51 in this second embodiment.

In this manner, the processor 32 repeats ACT51, ACT140, and ACT170 to wait for the occurrence of one of the reception of an off notification, a product registration command including a product code, or a checkout request command.

When it is determined in ACT140 that a product registration command including a product code is received, the processor 32 executes ACT180 to ACT200, as in the first embodiment. That is, in ACT180, the processor 32 gets product information from the store server 2 using the product code included in the received product registration command, and in ACT190, the processor 32 additionally registers a record to the purchased product data area 314 of the information terminal table 31, the record includes the product code included in the product registration command, and the price, product name, and the like acquired from the store server 2. Then, in ACT200, the processor 32 generates data of the updated product registration screen and transmits it to the information terminal 8. Thereafter, the processor 32 proceeds to ACT170 in this second embodiment.

When it is determined in ACT51 that an off notification is received, the processor 32 transmits an image display end instruction to the information terminal 8 in ACT46. Thereby, the information terminal 8 ends imaging by the front camera 815 and/or the rear camera 816, and ends the pop-up display of the face image IM81 and/or the basket inside image IM82 on the product registration screen SC81. Thereafter, the processor 32 proceeds to ACT52.

In ACT52, the processor 32 transmits warning information to the store clerk terminal 6. The warning information is different from that in ACT36 in the first embodiment, and includes the terminal code of the information terminal 8 to which the image display end instruction was given. Thereafter, the processor 32 proceeds to ACT140.

When it is determined in ACT170 that a checkout request command is received, the processor 32 executes a checkout process as described in the first embodiment for ACT230. Once this checkout process is ended, the processor 32 ends the process related to the information terminal 8.

As described above, in the cart controller 3 according to the second embodiment, as in the first embodiment, at least one of the face image IM81, which is an example of a customer's face image, and the basket inside image IM82, which is an example of an image of products stored in the basket placed in the cart 9, can be displayed on the touch panel 814 which is an example of a display of the information terminal 8 which is an example of a product registration terminal, and thus the customer can be given the impression that he or she is being monitored. Thus, according to this second embodiment, when customers themselves register products, it is possible to provide an information management server that can reduce fraudulent behavior in which customers leave the store without registering products and paying for them.

In addition, when a customer starts using the information terminal 8, that is, when the customer logs in, the processor 32 controls the display of at least one of the face image IM81 and the basket inside image IM82 on the touch panel 814 of the information terminal 8. When the customer instructs the information terminal 8 to end the display of an image by performing a display-off operation, the processor 32 performs control so that the display of at least one of the face image IM81 and the basket inside image IM82 on the touch panel 814 of the information terminal 8 is ended.

In this manner, it is possible to end the display of the face image IM81 and/or the basket inside image IM82 on the information terminal 8 in response to a customer's request.

In addition, the communication interface further communicates with the store clerk terminal 6, which presents information to the store clerk, and the processor 32 further notifies the store clerk that the display of at least one of the face image IM81 and the basket inside image IM82 on the information terminal 8 has been ended in response to the customer's instruction.

In this manner, the store clerk can be notified when the display of the image on the information terminal 8 is ended. Thus, when the relevant customer performs checkout, the store clerk can particularly carefully monitor the behavior of the customer who ended the display of the face image IM81 or the basket inside image IM82 on the information terminal 8 with a possible intent to commit fraudulent behavior.

### Third Embodiment

The above-mentioned second embodiment may be combined with the first embodiment. That is, when the display of at least one of the face image IM81 and the basket inside image IM82 on the information terminal 8 is ended in response to a customer's request, the display of the face image IM81 and/or the basket inside image IM82 on the information terminal 8 that is turned off may be restored in response to the detection of an unregistered product being placed into the basket as described in the first embodiment.

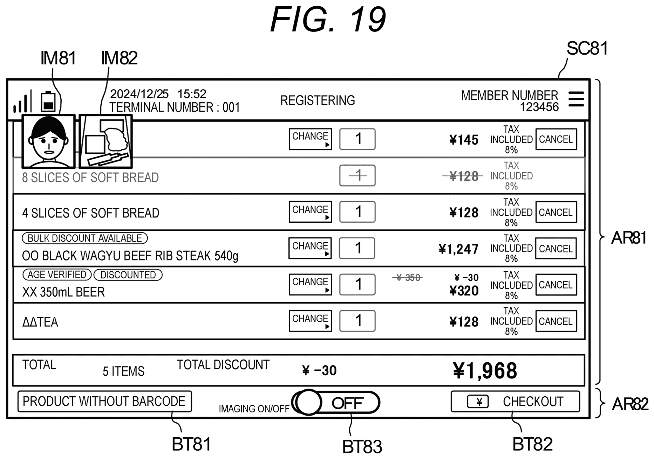

FIG. 19 is a schematic diagram showing an example of the product registration screen SC81 of the information terminal 8 in a third embodiment. When an unregistered product is placed into the basket even though the display of the face image IM81 and/or the basket inside image IM82 on the product registration screen SC81 was previously ended (and the switch button BT83 in the operation area AR82 is changed to a display form indicating display-off), the processor 32 of the cart controller 3 displays the face image IM81 and/or the basket inside image IM82 on the information terminal 8 as shown in FIG. 19.

Thereby, it is possible to achieve both the effects of the first embodiment and the effects of the second embodiment in combination.

Although the first to third embodiments are particularly described above, the embodiments of the present disclosure are not limited thereto.

For example, in modifications of the first and third embodiments, the processor 32 of the cart controller 3 may end the pop-up display of the face image IM81 and/or the basket inside image IM82 on the information terminal 8 after a certain period of time elapses.

Furthermore, in the first to third embodiments, the start/end of display of the face image IM81 and/or the basket inside image IM82 is controlled by the processor 32 of the cart controller 3, but in other examples this display may be controlled by the information terminal 8. That is, the processor 811 of the information processing device 81 may control the start/end of the display. In other words, the information processing device 81 may provide the control functions related to the display of the face image IM81 and/or the basket inside image IM82 in the modifications of the first to third embodiments.

In the first to third embodiments, the start and end of imaging by the front camera 815 and/or the rear camera 816 and the start and end of display of the face image IM81 and/or the basket inside image IM82 are linked to each other, either of the front camera 815 or the rear camera 816 may be configured to capture images at all times while a customer is using the information terminal 8.

In addition, the images captured by the front camera 815 and/or the rear camera 816 may be stored in the store server 2 via the cart controller 3.

In addition, the cart controller 3 is not limited to being connected to the network 7 within the store, but may be installed in a head office of a company that operates the store and which is connected to a network outside the store such as the Internet. Furthermore, the cart controller 3 is not limited to being owned by the store or the head office, but may be operated by a service provider that has a contract with the store or the head office.

Furthermore, in the first to third embodiments, the cart control program 341 may be stored in advance in the auxiliary storage device 34 or the main memory 33 of the cart controller 3. In other examples, a cart control program may be transferred separately from the cart controller 3 then written to a storage device provided in the cart controller 3 in response to an operation by a user or the like. The transfer of the cart control program can be performed by recording the program on a removable non-transitory recording medium or by communication via a network. The recording medium may be in any format, such as a CD-ROM or memory card, as long as it can store the program and can be read by a device.

While certain embodiments have been described, these embodiments have been presented by way of example only, and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

## Claims

1. A product registration system, comprising:
a network;
a mobile product registration terminal connectable to the network and configured to permit a customer to perform product registration operations on products for sale at a store while moving around the store;
a cart control server connected to the network and configured to:
register products in a transaction table in response to a product registration operation performed on the mobile product registration terminal, and
cause a product registration screen to be displayed on a display of the mobile product registration terminal, the product registration screen including information of registered products in the transaction table; and
a store clerk terminal configured to present information related to usage of the mobile product registration terminal to a store clerk, wherein
the cart control server is further configured to:
cause at least one of a customer facial image captured by a camera of the mobile product registration terminal or a basket image of a cart product placement area of a cart on which the mobile product registration terminal is attached to be displayed on a display screen of the mobile product registration terminal, and
transmit a warning notification over the network to the store clerk terminal when a switching operation is performed to turn off the displaying of the customer facial image or the basket image on the display screen of the mobile product registration terminal.

2. The product registration system according to claim 1, wherein the cart includes a weight sensor to provide weight data for products placed in the cart product placement area.

3. The product registration system according to claim 2, wherein the cart control server is further configured to:
determine whether an unregistered product is placed into the cart product placement area based on reception or not of the product identification information and weight data from the cart.

4. The product registration system according to claim 3, wherein, when the unregistered product has been determined to have been placed in the cart product placement area, the cart control server causes at least one of the customer facial image and the basket image to be displayed on the display screen of the mobile product registration terminal.

5. The product registration system according to claim 4, wherein the cart control server additionally sends a notification to the store clerk terminal when the unregistered product has been determined to have been placed in the cart product placement area.

6. The product registration system according to any one of claims 1 to 5, wherein the cart control server is further configured to:
determine whether an unregistered product is placed into the cart product placement area based on reception or not of the product identification information.

7. The product registration system according to any one of claims 1 to 6, wherein the cart product placement area is a basket area of the cart.

8. The product registration system according to any one of claims 1 to 7, wherein both the customer facial image and the basket image are displayed on the display screen.

9. The product registration system according to claim 8, wherein both the customer facial image and the basket image are displayed on the display screen as a pop-up image over a product registration screen.

10. The product registration system according to any one of claims 1 to 9, wherein the mobile product registration terminal further comprises:
- a product scanner to acquire product information from products selected by the customer,
- a first camera facing towards the cart product placement area and configured to capture the basket image, and
- a second camera facing towards a customer user position and configured to capture the customer facial image, wherein the display screen faces towards the customer user position.

11. A retail store product registration system for fraud prevention comprising a product registration system according to any one of claims 1 to 10, the retail store product registration system further comprising:
at least one cart having a cart product placement area wherein the mobile product registration terminal is mounted on the at least one cart.

12. A cart control server for a product registration system, the cart control server comprising:
a communication interface connectable to a mobile product registration terminal mounted on a cart and with which a customer performs a registration operation on products while moving around a sales floor of a store; and
a processor configured to:
register products in a sales transaction based on product information received via the communication interface from the mobile product registration terminal in the registration operation,
cause at least one of a customer facial image captured by a first camera of the mobile product registration terminal and a basket image captured by a second camera of the mobile product registration terminal of a product placement area of the shopping cart to be a displayed on a display screen of the mobile product registration terminal, and
output a notification via the communication interface to a store clerk terminal when a displaying of the at least one of the customer facial image and the basket image is ended by the customer by an operation at the mobile product registration terminal.

13. The cart control server according to claim 12, wherein the processor is further configured to:
determine whether an unregistered product is placed into the product placement area based on reception of product information and weight data transmitted from the shopping cart, and
cause the at least one of the customer facial image and the basket image to be displayed on the display screen after it is determined the unregistered product has been placed into the product placement area.

14. The cart control server according to claim 13, wherein the processor is further configured to cause a warning to be output to the store clerk terminal indicating the unregistered product has been placed in the cart.

15. The cart control server according to any one of claims 12 to 14, wherein both the customer facial image and the basket image are displayed on the display screen
